(19) **Europäisches Patentamt**

**European Patent Office**

**Office européen des brevets**

(11) Numéro de publication: **0 019 981**
**B1**

(12) **FASCICULE DE BREVET EUROPEEN**

(45) Date de publication du fascicule du brevet: **02.11.83**

(21) Numéro de dépôt: **80200498.6**

(22) Date de dépôt: **24.05.80**

(51) Int. Cl.³: **B 60 C 25/18**

(54) **Machine pour la mise en place de valves sur des jantes pour pneus sans chambre.**

(30) Priorité: **28.05.79 FR 7914243**

(43) Date de publication de la demande:
**10.12.80 Bulletin 80/25**

(45) Mention de la délivrance du brevet:
**02.11.83 Bulletin 83/44**

(84) Etats contractants désignés:
**DE GB IT SE**

(56) Documents cités:
**FR - A - 1 365 291**
**US - A - 2 900 709**

(73) Titulaire: **SCHRADER S.A.**
**48, rue de Salins**
**F-25300 Pontarlier (FR)**

(72) Inventeur: **Rosaz, Guy**
**20, rue du Château Chastaing**
**F-25300 Pontarlier (FR)**

(74) Mandataire: **Silhol, Christian Maurice Alfred**
**c/o BUGNION S.A. Conseils en Propriété**
**Industrielle 10, route de Florissant Case Postale**
**375**
**CH-1211 Genève 12 - Champel (CH)**

Courier Press, Leamington Spa, England.

EP 0 019 981 B1

Machine pour la mise en place de valves sur des jantes pour pneus sans chambre

L'invention concerne une machine pour le montage des valves sur des jantes destinées à être équipées de pneus sans chambre à air.

Afin de réduire le prix de revient du montage des pneus, il existe des machines pour mettre en place une valve sur chaque jante d'une même dimension.

Chaque type de voiture devant recevoir des roues dont les caractéristiques sont en relation avec les performances choisies par le constructeur, il en résulte, dans une fourchette tendant à se réduire, plusieurs séries de jantes ayant un diamètre et une épaisseur différents.

Le document FR—A—1.365.291 décrit une machine comportant un dispositif automatique d'amenée de jantes au mécanisme d'alimentation en valves et un mécanisme introducteur de valves destiné à être utilisé avec un appareil traitant des jantes de plusieurs diamètres.

Le document US—A—2.900.709 décrit une machine complètement automatique comportant un convoyeur de jantes.

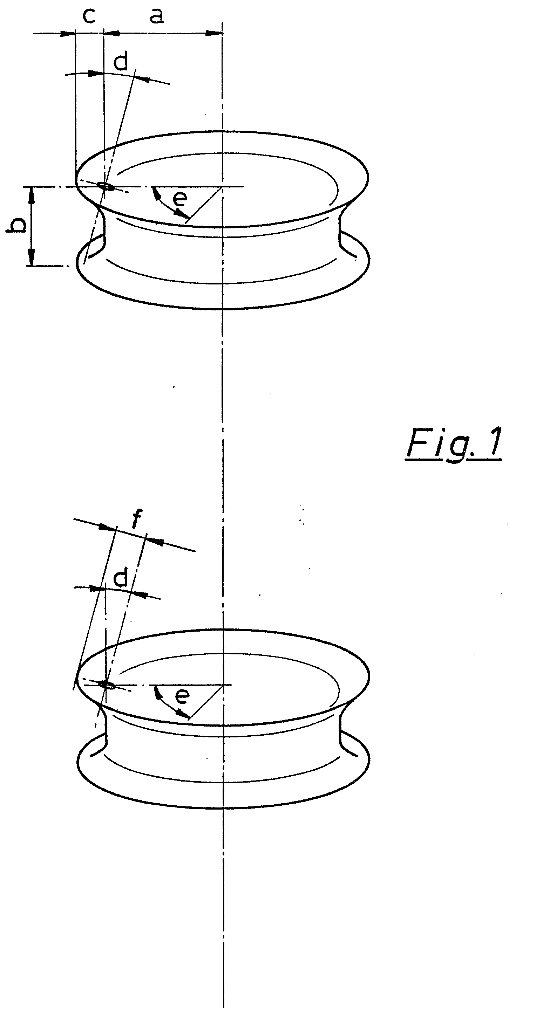

La définition géométrique des principaux paramètres à prendre en compte pour construire une machine mettant en place une valve sur une jante est précisée comme suit (figure 1):
— la distance radiale (a) qui sépare le centre du trou de valve de l'axe de la jante,
— la distance axiale (b) qui sépare le centre du trou de valve du bord opposé de la jante,
— la position angulaire (e) du trou de valve,
— l'angle (d) entre la normale à la face d'appui de la valve et l'axe de la jante.

Les machines connues ne tiennent pas compte de l'angle (d) dont la variation selon les différentes jantes est considérée comme étant négligeable.

Par contre, les distances radiales (a) et axiales (b) varient très sensiblement d'une série de jante à l'autre, selon les différentes dimensions et selon les différents fabricants.

Dans certains cas, on substitue au paramètre (a) son complément au rayon de la jante (c) et on estime, à tort, que cette valeur est suffisamment régulière pour être considérée comme constante. En effet, deux jantes d'un même type mais d'un fabricant différent, ne sont pas caractérisées par le même complément au rayon (c) du paramètre (a).

Il résulte de ces conceptions que les machines connues ne peuvent fonctionner avec des jantes différentes qu'après une adaptation particulière à chaque modèle, sinon, lors de la mise en place de la valve, il arrive fréquemment que celle-ci ne soit pas exactement en face du trou, ce qui provoque un rebut.

La machine selon l'invention prend en compte non pas les paramètres cités, mais la position du trou de valve sur la jante caractérisée par les paramètres suivants:
— l'angle (d) entre la normale à la face d'appui de la valve et l'axe de rotation de la jante, les variations de cet angle selon les différentes jantes étant considérées comme négligeables;
— la distance (f) entre le centre du trou de valve et le bord de la jante, mesurée dans le plan d'appui de la valve, il s'avère que cette distance est sensiblement plus constante que ne l'est la distance (c) définie ci-dessus;
— la position angulaire (e) du trou.

Une machine connue, notamment du brevet FR—A—1365291 comporte des moyens de commande pneumatiques, électriques et électroniques programmant logiquement:
— un transrouleur amenant les jantes jusqu'à la machine et les évacuant après mise en place des valves;
— un dispositif de séparation des jantes et de sélection de celles-ci sur le transrouleur de la position d'attente à la position de travail puis à la position d'éjection;
— un dispositif d'appui de la jante en position de travail sur des moyens d'entraînement en rotation sur le transrouleur;
— un dispositif d'entraînement en rotation de chaque jante en position;
— un dispositif de détection de la position du trou de valve;
— un dispositif de positionnement du trou de valve sur un axe commun à une pointe de centrage et à un vérin d'introduction muni d'une valve à mettre en place;
— un dispositif de sélection d'une valve pour chaque jante;
— un dispositif de mise en place d'une valve dans le trou de valve de la jante;
— un dispositif de maintien de la jante dans la position de travail pendant la mise en place de la valve.

Le but de l'invention est de réaliser une machine qui s'adapte automatiquement aux différents paramètres d, f, e définissant un type de jante, de façon que soient supprimés, dans une fourchette de dimensions usuelles, les réglages préalables à la mise en route d'une série différente.

Pour obtenir ce résultat la machine selon l'invention est caractérisée par le fait que la distance (f) entre le centre du trou de valve et le rebord de la jante est mesurée par le dispositif de détection du trou de valve comportant en particulier un vérin de mise en place, selon un axe 22, d'une cellule de détection dont la partie émettrice est séparée de la partie détectrice par un rouleau contre lequel est appuyé le rebord extérieur de la jante,
par le fait que la position angulaire (e) du trou de valve entre les positions du dispositif de détection et du dispositif de positionnement est donnée par un galet mis en mouvement par la jante dont il mesure l'angle de rotation entre ces deux positions,

par le fait que les dispositifs de détection et de positionnement sont situés dans des plans différents et qu'ils sont mécaniquement indépendants dans leurs mouvements,

par le fait que l'angle (d) existant entre la normale à la face d'appui de la valve et l'axe de rotation de la jante a pour sommet une articulation fixée sur un support du dispositif d'introduction d'une valve formé, en particulier, d'un vérin orienté selon ledit angle (d) seulement pendant l'introduction d'une valve.

Une autre caractéristique de cette machine réside dans le fait que les positions A, B, C, successives de chaque jante sur le transrouleur, sont dans un même plan perpendiculaire à l'axe de rotation des jantes.

Les principaux avantages de cete machine résident dans le fait que l'ensemble des opérations de mise en place de la valve sont automatisées quelles que soient les dimensions des jantes destinées à équiper des véhicules légers.

D'autres avantages ressortiront de la description, faite à titre d'exemple non limitatif, d'une forme d'exécution de la machine selon l'invention et du dessin dans lequel:

la figure 1 est une définition géométrique des paramètres,

la figure 2 est un schéma d'ensemble,

la figure 3 est un schéma du dispositif de transfert des jantes,

la figure 4 est un schéma des dispositifs d'entraînement en rotation et de détection du trou de valve,

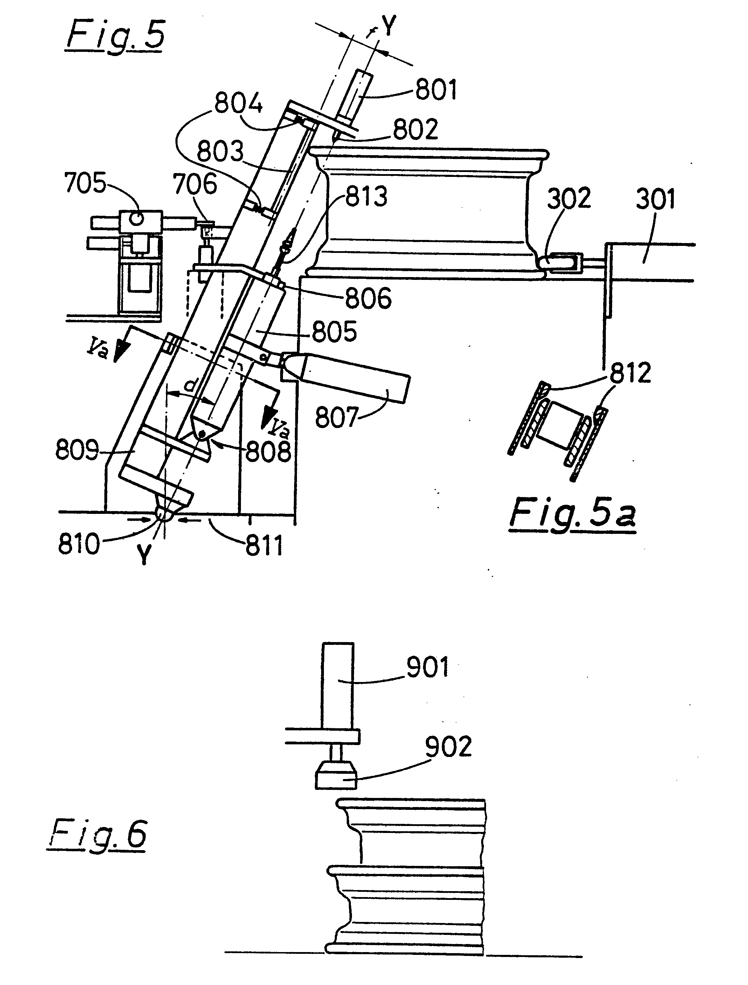

la figure 5 est un schéma des dispositifs de mise en place de la valve,

la figure 5a est un détail de la figure 5,

la figure 6 est un schéma du dispositif de maintien pendant la mise en place de la valve.

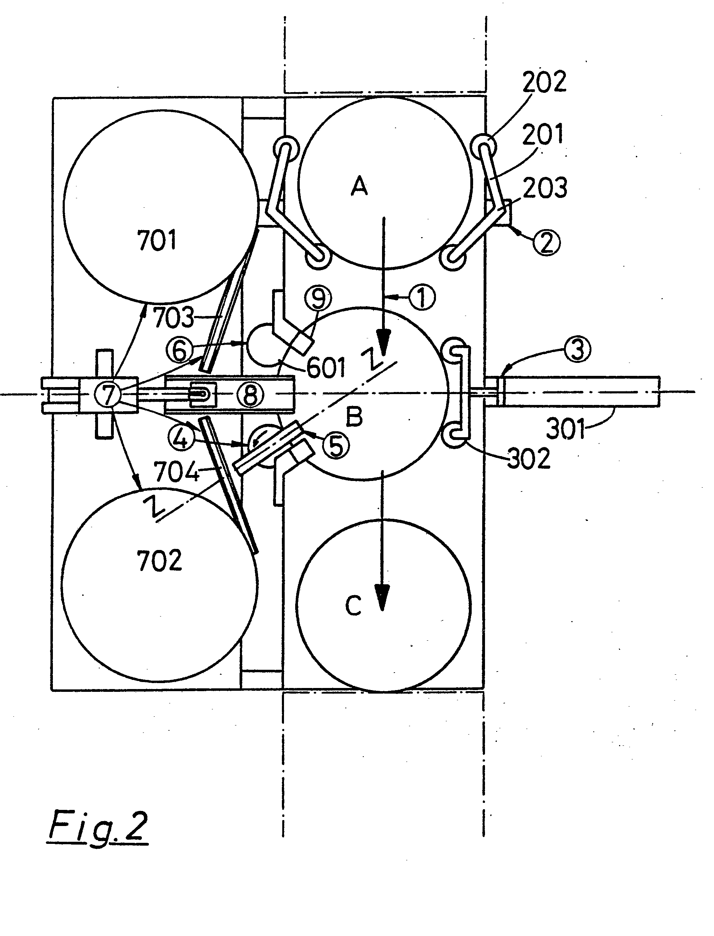

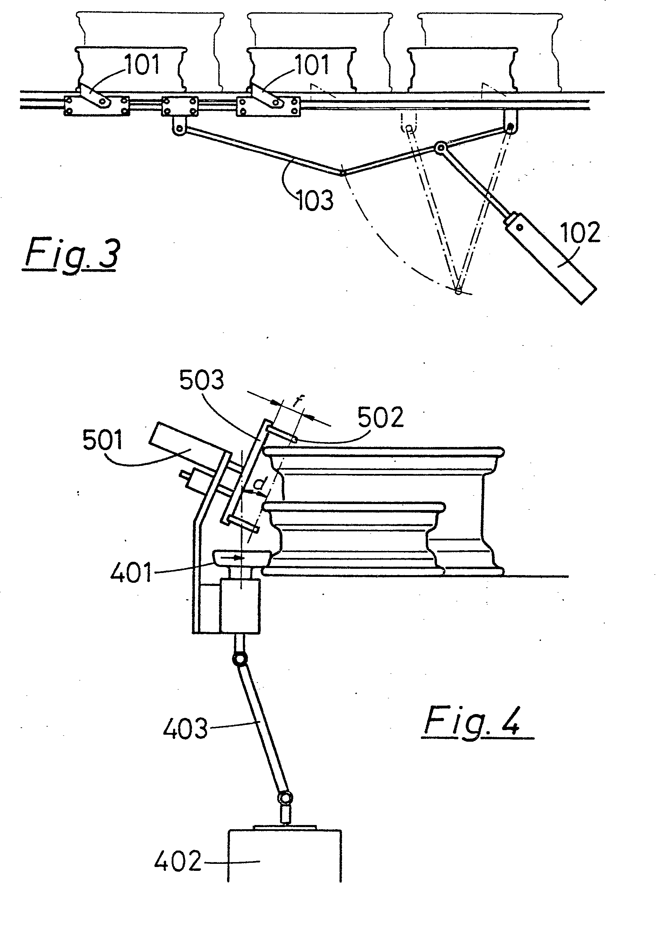

Les figures 2 et 3 montrent que les positions d'attente (A), de travail (B), d'éjection (C) des jantes sont dans un même plan perpendiculaire à l'axe de rotation des jantes. Le cheminement des jantes sur un transrouleur est effectué par l'intermédiaire de crochets 101, éclipsables au recul et commandés en translation, sur un rail de guidage, par un vérin 102 et une genouillère 103.

Le dispositif de séparation et de mise en place des jantes (2) comporte des séparateurs constitués par au moins une équerre portant à l'extrémité de chacun de ses bras 201 un galet 202. En tournant sur un pivot 203, les séparateurs libèrent une jante entre leurs galets et la laissent passer de la position A à la position B.

Le dispositif d'appui (3) est constitué par un vérin 301 dont la tige commande par son extrémité libre deux galets 302 qui positionnent la jante de façon que son centre soit situé dans un plan perpendiculaire à son plan de symétrie, ledit plan perpendiculaire contenant deux axes, l'axe dudit vérin 301 et l'axe YY commun à une pointe de centrage 802 et à un vérin 805 d'introduction d'une valve, la fonction de ce dispositif étant d'appuyer la jante contre un rouleau 401 qui l'entraîne en rotation.

Le dispositif d'entraînement en rotation (4) est constitué par ledit rouleau 401 entraîné par un moteur 402 par l'intermédiaire d'un cardan 403. Le rouleau 401 est mis en rotation par le moteur 402 dès le début de la poussée exercée sur la jante par le vérin 301 au moyen des galets 302 de façon à faciliter le centrage de la jante.

Le dispositif de détection du trou de valve (5) est constitué par une cellule de détection 502 commandée par un vérin 501. La partie émettrice de la cellule est séparée de la partie détectrice par un rouleau d'appui 503 sur le bord de la jante. Ce dispositif a pour fonction de détecter le trou de valve, lors de son passage à l'insertion du faisceau optique, schématisé par l'axe ZZ incliné selon l'angle (d), dont le rétablissement commande le dispositif de positionnement (6).

Le dispositif de positionnement (6) du trou de valve sur l'axe YY est constitué par un galet 601 entraîné en rotation lente, dès que la détection du trou est réalisée, jusqu'à ce que ledit trou soit placé sur l'axe YY. Ce galet 601 mesure l'angle de rotation de la jante entre la détection (5) et le positionnement (6). Les dispositifs de détection (5) et de positionnement (6) sont situés dans des plans différents, ils sont mécaniquement indépendants dans leurs mouvements.

Le dispositif de sélection d'une valve (7) pour chaque jante est constitué par au moins un bol 701, 702 vibrant approvisionné en valves, au moins un rail 703, 704 conduisant les valves à un manipulateur de sélection 705 qui place chaque valve dans une pince 706 de prise en charge qui l'introduit sur le doigt 813 du vérin d'introduction 805.

Le dispositif de mise en place (8) d'une valve dans le trou de valve de la jante est constitué par:

— un vérin de recentrage 801,

— un doigt de recentrage 802,

— un galet d'appui 803 sur le bord de la jante,

— des ressorts 804 de compensation du galet d'appui,

— un vérin 805 d'introduction de la valve,

— un berceau 806 de positionnement du vérin d'introduction,

— un vérin 807 de déplacement du vérin d'introduction,

— une articulation 808, du vérin d'introduction sur son support,

— un support 809 de l'ensemble dudit dispositif (8),

— une rotule 810 sur laquelle s'articule ledit support,

— un verrouillage 811 de la rotule,

— un appui 812 de recentrage par rapport à la position d'alimentation en valves,

— un doigt support de valve 813.

Le vérin 801 muni d'un doigt 802 de recentrage et le vérin 805 porteur d'une valve à mettre en place dans son emplacement sur la jante sont disposés sur le support 809 de façon que ces trois éléments soient sur un même axe YY. Le support 809 comporte un galet d'appui 803 monté rotativement sur deux ressorts 804 de compensation, ledit galet étant disposé sur le support de façon que le rebord extérieur de la jante s'y appuie pendant sa rotation et au cours de la phase d'introduction de la valve. Le point d'appui du vérin 805 d'introduction de la valve est une articulation 808. Le support 809 comporte également un berceau 806 de positionnement du vérin d'introduction 805 et un appui de recentrage 812 déterminant la position dans laquelle l'axe du vérin d'introduction coïncide avec l'axe YY. Un vérin 807 à double effet prend appui sur le bâti pour déplacer alternativement le vérin d'introduction 805 tantôt vers la pince 706 de prise en charge d'une valve, tantôt vers l'appui de recentrage 812 à travers le support 809. Un verrouillage 811 immobilise le support 809 sur la rotule 810 lorsque ledit support fait un angle (d) avec la normale au plan de symétrie de la jante afin que le vérin puisse mettre la valve en place.

Le dispositif d'appui (9) est constitué par un vérin 901 agissant sur un tampon 902 de façon que la jante soit maintenue pour résister à la poussée du dispositif de mise en place de le valve (8).

Le fonctionnement de la machine se déroule comme suit:

— une jante est en attente à la position A entre les bras séparateurs 201;

— le dispositif de sélection d'une valve (7) entre en action,

— la jante est transférée de la position A à la position B par l'intermédiaire des crochets 101 commandés en translation, sur le rail de guidage, par le vérin 102 muni de la genouillère 103, cette genouillère permettant d'obtenir une plus grande rapidité de mouvement avec une course relativement courte du vérin de commande 102;

— la jante vient s'appuyer sur les rouleaux 401 et 601 sous l'action du vérin 301 exerçant une poussée par l'intermédiaire des galets 302;

— le rouleau 401 est mis en rotation par le moteur 402 dès le début de la poussée du vérin 301 afin de faciliter le centrage de la jante;

— le dispositif de détection du trou de valve (5) se met en action au contact du bord de la jante contre le rouleau 503. Pendant la recherche du trou, la jante est mise en rotation rapide par le rouleau 401; après détection du trou, la jante passe en rotation lente pour le positionnement du trou de valve par le dispositif de positionnement (6).

Dans le même temps, un comptage par tachymètre ou codeur optique va avoir lieu pour permettre au trou détecté sur l'axe ZZ de venir s'arrêter sur l'axe YY. En effet, le développement du secteur de jante concerné varie de 2 mm environ entre la plus petite et la plus grande jante pour véhicules légers.

L'arrêt de la rotation se fera par électro-frein agissant sur le moteur 402. A ce moment précis, la jante est bridée par le tampon 902 en caoutchouc, commandé par le vérin 901.

La mise en action du dispositif d'introduction d'une valve (8) s'effectue lors de la détection du trou par la cellule 502. Le support 809 du dispositif (8) déplacé par l'action du vérin de déplacement 807 passe d'une position perpendiculaire au plan de symétrie de la jante, à une position faisant un angle (d) avec ledit plan, venant ainsi en appui sur le berceau 806 et en alignement avec le pointeau de recentrage 802.

Le pointeau 802, entraîné par le vérin de recentrage 801, s'introduit dans le trou de valve ce qui a pour effet d'aligner sur un même axe, YY passant par le centre du trou de valve et faisant un angle (d) avec le plan perpendiculaire au plan de symétrie de la jante, le doigt d'introduction 813 et le pointeau 802.

Le trou de valve de la jante étant ainsi centré, le verrouillage 811 de la rotule 810 immobilise le support 809, ce qui autorise le retrait du doigt de centrage 802, hors du trou de valve.

Le vérin d'introduction de valve 805, dûment pourvu d'une valve arrosée avec de l'eau savonneuse, met celle-ci dans le trou de valve de la jante.

En fin d'opération, un contrôle de mise en place correcte peut être ajouté.

Après l'introduction de la valve, les galets d'appui 302 se retirent et la jante est débridée.

La jante est transférée de la position B de travail à la position C d'éjection et simultanément une autre jante passe de la position d'attente A à la position B. Pendant le transfert des jantes, le support 809 recule et vient se placer dans l'appui 812 de centrage. Le vérin 805 represent la position verticale en pivotant sur son articulation 808 pour attendre dans cette position le départ du cycle arrivant.

La présence de deux bols 701, 702 de sélection de valves permet de monter, indifféremment, un type de valve ou un autre dont le choix sera extérieur à la machine.

Le choix de la valve étant fait, c'est la présence d'une jante sur les séparateurs, dans la position A, qui déclenchera le cycle.

Le dispositif de sélection des valves (7) fonctionne de la manière décrite ci-après:

— le manipulateur de sélection 705 déplace la pince 706 de prise en charge d'une valve depuis sa position médiane jusqu'à une position située au-dessus d'un des rails d'alimentation 703, 704 par lequel arrivent les valves provenant d'un des bols d'alimentation 701, 702.

La pince 706 saisit la valve, revient à sa position médiane et place cette valve sur le doigt d'introduction 813.

**Revendications**

1. Machine pour la mise en place de valves sur des jantes destinées à être équipées avec des pneus sans chambre à air, comportant des moyens de commande pneumatiques, électriques et électroniques programmant logiquement:

— un transrouleur (1) amenant les jantes jusqu'à la machine et les évacuant après mise en place des valves;

— un dispositif de séparation (2) des jantes et de sélection de celles-ci sur le transrouleur de la position d'attente (A) à la position (B) de travail puis à la position (C) d'éjection;

— un dispositif d'appui (3) de la jante en position de travail (B) sur des moyens d'entraînement en rotation sur le transrouleur;

— un dispositif d'entraînement (4) en rotation de chaque jante en position (B);

— un dispositif de détection (5) de la position du trou de valve;

— un dispositif de positionnement (6) du trou de valve sur un axe YY commun à une pointe de centrage et à un vérin d'introduction muni d'une valve à mettre en place;

— un dispositif de sélection (7) d'une valve pour chaque jante;

— un dispositif de mise en place (8) d'une valve dans le trou de valve de la jante;

— un dispositif de maintien (9) de la jante pendant la mise en place de la valve;

caractérisée par le fait que la distance (f) entre le centre du trou de valve et le rebord de la jante est mesurée par le dispositif de détection du trou de valve (5) comportant en particulier un verin (501) de mise en place, selon un axe 22, d'une cellule (502) de détection dont la partie emettrice est séparée de la partie détectrice par un rouleau (503) contre lequel est appuyé le rebord extérieur de la jante,

par le fait que la position angulaire (e) du trou de valve entre les positions du dispositif de détection (5) et du dispositif de positionnement (6) est donnée par un galet (601) mis en mouvement par la jante dont il mesure l'angle de rotation entre ces deux positions,

par le fait que les dispositifs de détection (5) et de positionnement (6) sont situés dans des plans différents et qu'ils sont mécaniquement indépendants dans leurs mouvements,

par le fait que l'angle (d) existant entre la normale à la face d'appui de la valve et l'axe de rotation de la jante a pour sommet une articulation (808) fixée sur un support (809) du dispositif d'introduction (8) d'une valve formé, en particulier, d'un vérin (805) orienté selon ledit angle (d) seulement pendant l'introduction d'une valve.

2. Machine selon la revendication 1, caractérisée par le fait que les positions d'attente (A), de travail (B), d'éjection (C) des jantes sont dans un même plan perpendiculaire à l'axe de rotation des jantes et par le fait que le dispositif de transfert (1) comporte des crochets (101), éclipsables au recul, commandés en translation sur un rail de guidage par un vérin (102) agissant par l'intermédiaire d'une genouillère (103).

3. Machine selon la revendication 2, caractérisée par le fait que le dispositif de séparation (2) des jantes comporte au moins un séparateur donstitué par une équerre portant à l'extrémité de chacun de ses bras (201) un galet (202) et que ladite équerre est montée sur un pivot (203).

4. Machine selon la revendication 3, caractérisée par le fait que le dispositif d'appui (3) est constitué par un vérin (301) dont la tige porte et commande, par son extrémité libre, deux galets (302) qui positionnent la jante de façon que son centre soit situé dans un plan perpendiculaire à son plan de symétrie, ledit plan contenant deux axes, l'axe dudit vérin et l'axe YY commun à une pointe de centrage (802) et à un vérin (805) d'introduction d'une valve, la fonction de ce dispositif étant d'appuyer la jante contre un rouleau (401) qui l'entraîne en rotation.

5. Machine selon la revendication 4, caractérisée par le fait que le dispositif d'entraînement en rotation (4) est constitué par un rouleau (401) entraîné par un moteur (402) par l'intermédiaire d'un cardan (403).

6. Machine selon la revendication 5, caractérisée par le fait que le dispositif de sélection (7) d'une valve pour chaque jante est constitué par au moins un bol (701, 702) approvisionné en valves, au moins un rail (703, 704) conduisant les valves à un manipulateur de sélection (705) et une pince (706) de prise en charge.

7. Machine selon la revendication 6, caractérisée par le fait que le dispositif de mise en place (8) d'une valve est constitué par un support (809) placé sur une rotule (810) fixée sur le bâti de la machine, ledit support étant pourvu, en particulier, d'un vérin (801) muni d'un doigt (802) de recentrage, d'un vérin (805) porteur d'une valve à mettre en place dans son emplacement sur la jante, ces trois éléments étant disposés sur le support selon un même axe YY.

8. Machine selon la revendication 7, caractérisée par le fait que le support (809) comporte un galet d'appui (803) monté rotativement sur deux ressorts (804) de compensation, ledit galet étant disposé sur le support de façon que le rebord extérieur de la jante s'y appuie pendant sa rotation et au cours de la phase d'introduction de la valve.

9. Machine selon la revendication 8, caractérisée par le fait que le point d'appui sur le support (809) du vérin d'introduction (805) de la valve est une articulation (808).

10. Machine selon la revendication 9, caractérisée par le fait que le support (809) comporte également un berceau (806) de positionnement du vérin d'introduction et un appui de recentrage (812) déterminant la position dans laquelle l'axe du vérin (805) d'introduction coïncide avec l'axe YY.

11. Machine selon la revendication 10, caractérisée par le fait qu'un vérin (807) à double effet prenant appui sur le bâti déplace alternativement le vérin (805) d'introduction tantôt vers la pince (706) de prise en charge d'une valve, tantôt vers l'appui de recentrage (812) à travers le support (809).

12. Machine selon la revendication 11, caractérisée par le fait qu'un verrouillage (811) immobilise le support (809) sur la rotule (810) lorsque ledit support fait un angle (d) avec la normale au plan de symétrie de la jante afin que le vérin (805) puisse mettre la valve en place.

**Patentasprüche**

1. Maschine zum Einsetzen von Ventilen in Felgen für schlauchlose Reifen mit pneumatischen, elektrischen und elektronischen Steuereinrichtungen zur logischen Steuerung von:
— einem Rollenförderer (1), welcher die Felgen bis zur Maschine heranführt und sie nach Einsetzen der Ventile wegführt;
— einer Einrichtung zum Trennen der Felgen und ihre Auswahl auf dem Rollenförderer von einer Wartestellung (A) zu der Arbeitsstellung (B) und dann zu der Auswerfstellung (C);
— einem Anschlag (3) der Felge in der Arbeitsstellung (B) an einer Antriebseinrichtung zur Drehung auf dem Rollenförderer;
— einer Antriebseinrichtung (4) zur Drehung jeder Felge in der Stellung (B);
— einer Einrichtung (5) zur Ermittlung der Lage des Ventilloches;
— einer Einrichtung (6) zum Ausrichten des Ventilloches auf einer gemeinsamen Achse YY zwischen einer Zentrierspitze und einem Einsetzkolben mit einem einzusetzenden Ventil;
— einer Einrichtung (7) zur Auswahl eines Ventiles für jede Felge;
— einer Einrichtung (8) zum Einsetzen eines Ventiles in das Ventilloch der Felge und
— einer Einrichtung (9) zum Halten der Felge während des Einsetzen des Ventiles,
dadurch gekennzeichnet, dass der Abstand (f) zwischen der Mitte des Ventilloches und dem Rand der Felge von der Einrichtung zur Ermittlung des Ventilloches (5) gemessen wird, welche im wesentlichen einen Kolben (501) zum Ausrichten einer Prüfzelle (502) auf einer Achse ZZ aufweist, deren Senderteil von dem Empfängerteil durch eine Rolle (503) getrennt ist, an welche der Aussenrand der Felge anstösst,
dass die Winkellage (e) des Ventilloches zwischen den Stellungen der Ermittlungseinrichtung (5) und der Ausrichteinrichtung (6) durch eine Rolle (601) gegeben wird, die von der Felge in Bewegung versetzt wird, deren Drehwinkel zwischen diesen beiden Stellungen sie misst, dass die Ermittlungseinrichtung (5) und die Ausrichteinrichtung (6) in verschiedenen Ebenen angeordnet und mechanisch unabhängig in ihren Bewegungen sind, und
dass der Winkel (d) zwischen der Senkrechten auf der Auflagefläche des Ventiles und der Drehachse der Felge als Spitze ein Gelenk (808) hat, welches an einem Träger (809) der Einsetzeinrichtung (8) für ein Ventil sitzt, insbesondere eines Kolbens (805), der nach diesem Winkel (d) während des Einsetzens eines Ventiles ausgerichtet wird.

2. Maschine nach Anspruch 1, dadurch gekennzeichnet, dass die Wartestellung (A), die Arbeitsstellung (B) und die Auswerfstellung (C) der Felgen in einer gleichen Ebene rechtwinklig zur Drehachse der Felgen angeordnet sind und dass die Fördereinrichtung (1) beim Rückzug versenkbare Haken (101) aufweist, deren Bewegung auf einer Führungsschiene von einem Kolben (102) über ein Kniegelenk (103) gesteuert wird.

3. Maschine nach Anspruch 2, dadurch gekennzeichnet, dass die Trenneinrichtung (2) für die Felgen wenigstens einen Trennarm aus einem Winkeleisen aufweist, von dem jeder Arm (201) eine Rolle (202) trägt, und dass dieses Winkeleisen auf einem Schwenkzapfen (203) sitzt.

4. Maschine nach Anspruch 3, dadurch gekennzeichnet, dass die Anschlagseinrichtung (3) aus einem Kolben (301) besteht, dessen Kolbenstange an ihrem freien Ende zwei Rollen (302) trägt, welche die Felge in der Weise ausrichten, dass sich ihre Mitte in einer Ebene rechtwinklig zu ihrer Symmetrieebene befindet, und zwar in einer Ebene mit zwei Achsen, nämlich der Achse des Kolbens und der gemeinsamen Achse YY zwischen einer Zentrierspitze (802) und einem Einsetzkolben (805) für ein Ventil, wobei die Aufgabe dieser Einrichtung ist, die Felge gegen eine Rolle (401) zu drücken, die sie in Umdrehung versetzt.

5. Maschine nach Anspruch 4, dadurch gekennzeichnet, dass die Drehantriebseinrichtung (4) aus einer Rolle (401) besteht, die von einem Motor (402) über eine Kardanwelle (403) angetrieben wird.

6. Maschine nach Anspruch 5, dadurch gekennzeichnet, dass die Auswahleinrichtung (7) für ein Ventil für jede Felge aus wenigstens einer Schale (701, 702) mit den Ventilen und wenigstens einer Schiene (703, 704) besteht, welche die Ventile zu einem Auswahlarm (705) und einer Entnahmezange (706) führt.

7. Maschine nach Anspruch 6, dadurch gekennzeichnet, dass die Einsetzeinrichtung (8) für ein Ventil aus einem Träger (809) auf einem Kugelgelenk (810) am Rahmen der Maschine besteht und der Träger insbesondere einen Kolben (801) mit einem Zentrierfinger (802) und einem Kolben (805) mit einem Halter für das an seinen Platz in der Felge einzusetzende Ventil aufweist und dass diese drei Elemente auf dem Träger in der gleichen YY-Achse angeordnet sind.

8. Maschine nach Anspruch 7, dadurch gekennzeichnet, dass der Träger (809) mit einer Anschlagsrolle (803) versehen ist, welche drehbar auf zwei Ausgleichsfedern (804) gelagert und auf dem Träger in der Weise angeordnet ist, dass der Aussenrand der Felge während ihrer Drehung und beim Einsetzen des Ventiles daran anliegt.

9. Maschine nach Anspruch 8, dadurch gekennzeichnet, dass der Lagerpunkt des Einsetzkolbens (805) für das Ventil auf dem Träger (809) ein Gelenk (808) ist.

10. Maschine nach Anspruch 9, dadurch gekennzeichnet, dass der Träger (809) auch ein Gestell (806) zum Ausrichten des Einsetzkolbens und einen Zentrieranschlag (812) zur Bestimmung der Lage aufweist, in welcher die Achse des Einsetzkolbens (805) mit der YY-Achse zusammenfällt.

11. Maschine nach Anspruch 10, dadurch gekennzeichnet, dass ein doppelt wirkender Kolben (807) am Rahmen den Einsetzkolben (805) abwechselnd einmal zur der Entnahmezange für ein Ventil und einmal zu dem Zentrieranschlag (812) durch den Träger (809) verschwenkt.

12. Maschine nach Anspruch 11, dadurch gekennzeichnet, dass eine Verriegelung (811) den Träger (809) an dem Kugelgelenk (810) festhält, sobald dieser Träger einen Winkel (d) mit der Senkrechten auf der Symmetrieebene der Felge bildet, damit der Kolben (805) das Ventil an seinen Platz setzen kann.

**Claims**

1. Machine for positioning valves on rims to be equipped with tubeless tires, comprising pneumatic, electrical and electronic control means programming logically:
— a transroller (1) transferring the rims to the machine and discharging them therefrom after the valve positioning step;
— a device (2) for separating the rims and selecting the rims on the transroller from the waiting position (A) to the working position (B) and subsequently to the ejection position (C);
— a presser device (3) for causing the rim to bear in the working position on the means for rotatably driving the transroller;
— a device for rotatably driving each rim in position (B);
— a device (5) for detecting the position of the valve hole;
— a device (6) for positioning the valve hole along an axis YY common to a centering point and to an insertion cylinder provided with a valve to be positioned;
— a device (7) for selecting a valve for each rim;
— a device (8) for introducing a valve into each rim valve hole;
— a device (9) for holding the rim during the valve positioning step;
characterized by the fact that the distance (f) between the centre of the valve hole and the rim edge is measured by the valve hole detection device (5) comprising more particularly a cylinder (501) for positioning along an axis 22 a detection cell (502) having its emitter portion separated from the detector portion by a roller (503) against which the outer edge of the rim is pressed,

by the fact that the angular position (e) of the valve hole between the positions of the detection device (5) and the positioning device (6) is given by a roller (601) actuated by the rim, of which it measures the angle of rotation between said two positions,

by the fact that the detection (5) and positioning (6) devices are located in different planes and that their movements are mechanically independent,

by the fact that the vertex of the angle (d) existing between the normal to the valve bearing face and the axis of rotation of the rim is a pivot point (808) of a support means (809) of the device (8) for introducing a valve which comprises more particularly a cylinder (805) oriented according to said angle (d) only during the insertion of a valve.

2. Machine according to claim 1, characterized by the fact that the waiting position (A), working position (B) and ejection position (C) of the rims are located in a common plane perpendicular to the axis of rotation of the rims, and by the fact that the transfer device (1) comprises hook means (101) retractable during the backward movement and driven for translation along a guide rail by a cylinder (102) operating through the intermediary of a toggle (103).

3. Machine according to claim 2, characterized by the fact that the device (2) for separating the rims comprises at least one separator consisting of a two-armed lever provided at the outer end of each arm (201) a roller (202) and that said lever is pivotally mounted (203).

4. Machine according to claim 3, characterized by the fact that the presser device (3) consists of a cylinder (301) of which the piston rod carries and controls through its free end a pair of rollers (302) adapted to so poisition the rim that its centre lies in a plane perpendicular to its plane of symmetry, said plane containing two axes, the axis of said cylinder and the axis YY common to a centering point (802) and to a cylinder (805) for inserting a valve, the function of this device consisting in pressing the rim against a roller (401) driving the rim for rotation.

5. Machine according to claim 4, characterized by the fact that the rotary driving device (4) consists of a roller (401) driven from a motor (402) with the interposition of a Universal shaft (403).

6. Machine according to claim 5, characterized by the fact that the device (7) for selecting a valve for each rim consists of at least one bowl (701, 702) supplied with valves, at least one rail (703, 704) transferring the valves to a selection handler (705) and a pair of loading tongs (706).

7. Machine according to claim 6, characterized by the fact that the device (8) for positioning a valve consists of a support (809) disposed on a ball (810) secured to the machine frame, said support being provided more particularly with a cylinder (801) having a recentering pin (802), and with a cylinder (805) carrying a valve to be positioned at its location on the rim, these three elements being disposed on the support along a common axis YY.

8. Machine according to claim 7, characterized by the fact that the support (809) comprises a bearing roller (803) rotatably mounted on a pair of compensation springs (804), said roller being so disposed on the support that the outer edge of the rim bears thereagainst during its rotation and during the valve insertion step.

9. Machine according to claim 8, characterized by the fact that the bearing point on the support (809) of the valve insertion cylinder (805) is a pivotal connection (808).

10. Machine according to claim 9, characterized by the fact that the support (809) also comprises a cradle (806) for positioning the insertion cylinder and a recentering bearing (812) determining the position in which the axis of the insertion cylinder (805) is coincident with the axis YY.

11. Machine according to claim 10, characterized by the fact that a double-acting cylinder (807) bearing against the frame structure moves the cylinder (805) alternatively towards the tongs (706) for loading a valve and toward the recentering bearing (812) through the support (809).

12. Maschine according to claim 11, characterized by the fact that locking means (811) hold the support (809) against movement on the ball (810) when said support forms an angle (d) with the normal to the plane of symmetry of the rim so that the cylinder (805) can position the valve.

Fig.1

*Fig.2*

_Fig.3_

_Fig.4_

_Fig.5_

_Fig.5a_

_Fig.6_